# EUROPEAN PATENT SPECIFICATION

(11) **EP 3 740 333 B1**
(45) Date of publication and mention of the grant of the patent: **11.05.2022**
(21) Application number: 18812270.9
(22) Date of filing: 08.11.2018
(51) Int. Cl.: B22D 17/22, B22D 17/32, G06F 30/00, G06F 113/22

(54) **METHOD FOR REGULATING A DIE-CASTING PROCESS**
VERFAHREN ZUR REGELUNG EINES DRUCKGUSSVERFAHRENS
PROCÉDÉ DE RÉGULATION D'UN PROCÉDÉ DE MOULAGE SOUS PRESSION

(30) Priority: 16.01.2018 IT 201800001087
(43) Date of publication of application: 25.11.2020
(73) Proprietor: Formula Foundry S.r.l., 20134 Milano (IT)
(72) Inventor: CAMERIN, Roberto, 20134 Milano (IT)
(74) Representative: Chimini, Francesco
(86) International application number: PCT/IB2018/058772
(87) International publication number: WO 2019/142030

(56) References cited:
- JP-A- 2005 254 308
- V. KUMAR ET AL: "A system for design of multicavity die casting dies from part product model", THE INTERNATIONAL JOURNAL OF ADVANCED MANUFACTURING TECHNOLOGY, vol. 67, no. 9-12, 1 August 2013 (2013-08-01), pages 2083-2107, XP055487691, London ISSN: 0268-3768, DOI: 10.1007/s00170-012-4633-y
- C.C TAI ET AL: "A runner-optimization design study of a die-casting die", JOURNAL OF MATERIALS PROCESSING TECHNOLOGY, vol. 84, no. 1-3, 1 December 1998 (1998-12-01), pages 1-12, XP055487709, NL ISSN: 0924-0136, DOI: 10.1016/S0924-0136(98)00031-4
- D.R. GUNASEGARAM ET AL: "Improvements engineered in UTS and elongation of aluminum alloy high pressure die castings through the alteration of runner geometry and plunger velocity", MATERIALS SCIENCE AND ENGINEERING: A, vol. 559, 1 January 2013 (2013-01-01), pages 276-286, XP055487707, AMSTERDAM, NL ISSN: 0921-5093, DOI: 10.1016/j.msea.2012.08.098

## Description

The present invention concerns a method for regulating a die-casting process for the production of pieces made of a metallic material.

As is known, a die-casting process employs a die-casting apparatus comprising a machine for the injection of a metallic material in the liquid state coupled with a die suitable to receive the material in the liquid state under pressure.

The injection machine comprises a container wherein is slidingly housed an injection piston controlled by a control fluid, e.g. oil. The flow of the control fluid into the container, and thus the movement of the injection piston, is controlled by control valves that may be regulated both in terms of the width of their opening and in terms of the time wherein such valves remain in a given state.

Usually, the container is connected to the die by means of a siphon and an extension.

The injection machine further comprises closure means, such as a toggle lever, which are suitable for closing and holding the die parts together during the casting step. An injection machine is thus identified, in particular, by the diameter of the injection piston and its closing force, or tonnage (as it is usually expressed in tons).

The die has at least one block, usually more than one, wherein a plurality of die cavities is obtained, which must be filled by the pressurized material coming from the injection machine. Each die cavity is connected to the inlet of the material in the die by at least one casting channel. The casting channel communicates with the die cavity via a respective casting runner.

Moreover, each die cavity communicates with at least one collection channel for air and any other substances present in the material in the liquid state, known as the overflow.

Die simulators already exist. These consist of software that is used by die manufacturers when designing a die. Such tools simulate the flow of material into the die and may be used, for example, to assist the designer in choosing filling strategies for the die cavities, choosing how to position the cavities, overflows, etc.

Some of these software programs, following the simulation, provide general information on the choice of the machine, in particular on the closing force and the diameter of the piston. JP 2005 254308 describes a method for designing a metal molding process.

The object of the present invention is to provide a method of regulating a die-casting process that may be used in particular by the foundry operator who must choose the injection machine and regulate its parameters, and that allows waste to be reduced as much as possible and high-quality molded parts to be obtained.

Said object is achieved with a regulating method according to claim 1. The dependent claims describe preferred embodiments of the invention.

The idea behind the present invention is to regulate the die-casting process starting from a design of the ideal parameters of the process, chosen to respect certain preestablished constraints that depend, for example, on the type of material used to make the pieces or the quality required for the pieces. During such design stage, it may be necessary to change the injection machine from the one initially chosen and/or modify the geometry of the die in order to comply with the predetermined constraints.

Once the ideal parameters of the die-casting process have been determined, a die cast piece is made to verify, from the detection of the injection curves, for example expressed by the stroke and velocity diagrams of the injection piston, what the actual dynamics of the machine used are and how far the actual parameters of the injection process, obtainable from the injection curve detected, deviate from those previously calculated.

On the basis of such comparison, the design parameters of the injection machine may thus be regulated, for example by acting on the control valves of the control fluid of the injection piston, so as to eliminate or at least reduce as much as possible the deviation from the ideal process parameters calculated in the design stage.

In accordance with claim 1, the regulating method therefore comprises the steps of:
a) designing the parameters of the die-casting process, comprising the sub-steps of:
   a1) setting a range of acceptable filling times for filling all die cavities and overflows;
   a2) setting an allowable runner velocity range for the metallic material in the liquid state to pass through the casting runners;
   a3) calculating, from die data representative of the geometry and type of the die, from the theoretical mass data of the impressions, the overflows, the casting channels and the deadhead, and from machine data comprising the diameter of the piston, the closing force, and the specific pressure to which the material in the liquid state is subjected, the theoretical filling times of each die cavity and the overflows and the theoretical runner velocities for each die cavity and for each overflow;
b) verifying whether the theoretical fill times and the theoretical runner velocities are within the respective predetermined ranges;
c) if the verification referred to in step b) gives a negative result, modifying the die and/or changing the injection machine and repeating steps a), b) and c); if the verification referred to in step b) gives a positive result:
d) making a first regulation of the injection parameters of the injection machine which determine the movements of the stroke and the velocity of the injection piston;
e) making a die cast piece with said injection parameters;
f) detecting the values of the effective masses of impressions, overflows and casting channels;
g) detecting the injection curves obtained from the die cast piece;
h) calculating, starting from the values of the effective masses of impressions, overflows and casting channels and from data obtainable from the injection curves, the effective filling time and the effective runner velocity for each cavity and overflow;
i) verifying whether the effective filling times and effective runner velocities are within an acceptable range of the theoretical filling times and theoretical runner velocities; if not:
j) carrying out a second regulation of the injection parameters of the injection machine and repeating steps e), g), h) and i).

In one embodiment, the die data representative of the geometry and the type of the die comprise at least some of the following data: moldable area, casting runner geometry, overflow runner geometry, casting channel geometry, die shift, number of die carriages, kinetic safety coefficient.

In one embodiment, step b) comprises at least one of the sub-steps of:
b1) calculating the theoretical stage two velocity of the injection piston and verifying that it is within a predetermined stage two velocity range;
b2) calculating the opening force of the die and checking that it is less than the closing force of the injection machine;
b3) calculating the PQ2 diagram of the injection machine, calculating the quadratic flow of the material in the liquid state and verifying that said quadratic flow is within the jet zone defined by the lines of the PQ2 diagram.

In one embodiment, the data obtainable from the injection curve comprise: the stroke and the acceleration time of the injection piston, the stroke and the deceleration time of the piston, the volume of the piston stroke at which the complete filling of the die occurs, the peak velocity of the injection piston, the maximum injection pressure.

In one embodiment, step a3) further comprises a calculation of the theoretical volume of the injection piston stroke wherein the complete filling of the die cavities and the overflows occurs after the material has reached the casting runners. Moreover, step h) includes the sub-steps of:
h1) detecting the effective volume of the stage two action of the stroke of the injection piston;
h2) calculating, on the basis of the data detected for the injection curve and of said theoretical portion of the injection piston stroke, the theoretical stage two injection piston stroke action volume.

Step i) further comprises a sub-step i1) of verifying if the effective stage two action volume is in an acceptable range of the theoretical stage two action volume calculated in step h2).

In one embodiment, the theoretical stage two action volume is calculated by subtracting the theoretical portion of the injection piston stroke calculated in step a3) to fill the die cavities and the overflows completely (generally during the injection piston deceleration stage), and the injection piston acceleration stroke necessary to reach the stage two peak velocity from the effective full-die stroke obtained from the injection curve acquired from the injection piston.

The features and advantages of the regulating method according to the invention will, however, become evident from the description hereinafter of their preferred embodiments, provided by way of indicative and nonlimiting example, with reference to the accompanying figures, wherein:
- figure 1 shows a graphical user interface that schematically represents a die-casting die and which is suitable to allow the user to enter geometric data identifying the die;
- figure 2 is a flowchart of an example of an algorithm that implements the regulating method according to the invention;
- figure 3 is a flowchart of an example of a procedure for entering design data for the die casting process;
- figure 4 is a flowchart of an example of a procedure to verify that the design data are consistent with the required quality;
- figure 5 is an example of a PQ2 diagram representing the injection machine-die combination;
- figure 6 is a flow diagram of an example of a procedure for regulating the design parameters of the injection machine; and
- figures 7-7e represent a sequence of diagrams of the injection stroke and velocity curves of the injection piston, relative to an example of a procedure for calculating the theoretical stage two action volume of the piston stroke.

In the following description, which illustrates some practical examples of the implementation of the regulating method according to the invention, some technical terms typical of the die-casting sector will be used. In particular:
- "cavity" of the die, or "impression", means the recess obtained in the body of the die having a shape complementary to the piece to be cast and therefore suitable for receiving the metallic material in its liquid state for making the piece;
- "overflow" means a vent duct connected to a die cavity and suitable for collecting gases and any other substances present in the liquid metallic material;
- "casting channel" means a die duct which receives the liquid material from the injection machine and feeds it to one or more die cavities. From a geometric point of view, a casting channel is identified by its cross-section, which may be elliptical, rectangular or trapezoidal;
- "casting runner", referring to the die cavity or overflow, means the opening at the entrance to the cavity or overflow through which the material passes in the liquid state. It is identified by a width and height;
- "block" of a die means an interchangeable part of the die from which several die cavities are formed which are not necessarily the same and/or have the same functions.

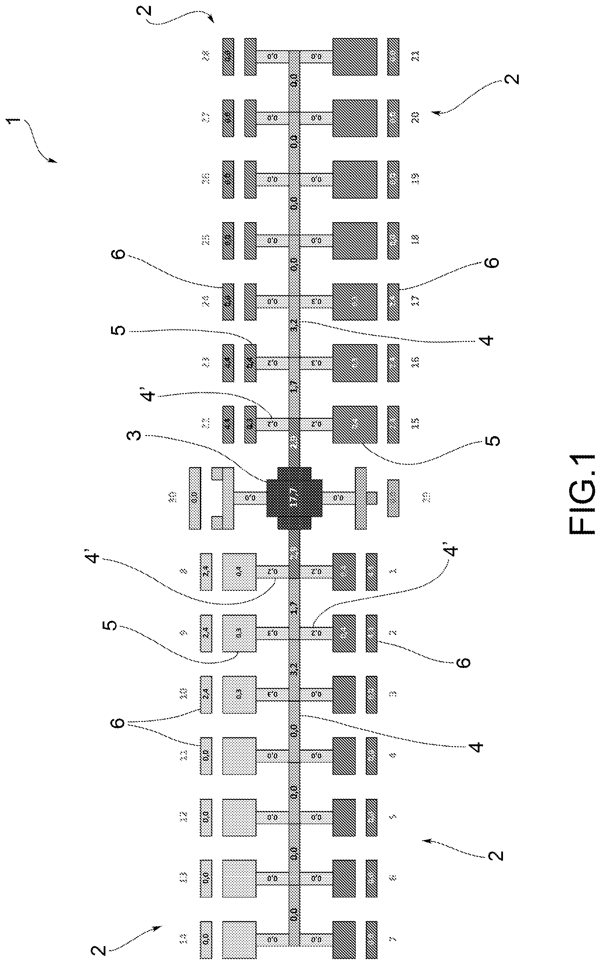

An example of a schematic representation of a die, used as a graphical interface for entering the die's geometric data into the calculation algorithm that implements the regulating method according to the invention, is shown in figure 1.

In such example, a die 1 with six blocks 2 is schematically shown. Centrally, one may note the deadhead 3, from which the casting channels 4 branch off. From two main casting channels 4, which extend in opposite directions from each other, several sub-channels 4' branch off, each communicating with a die cavity 5 through an impression casting runner. The overflows 6 are schematically represented on the side of the die cavity opposite to the one where the liquid material enters.

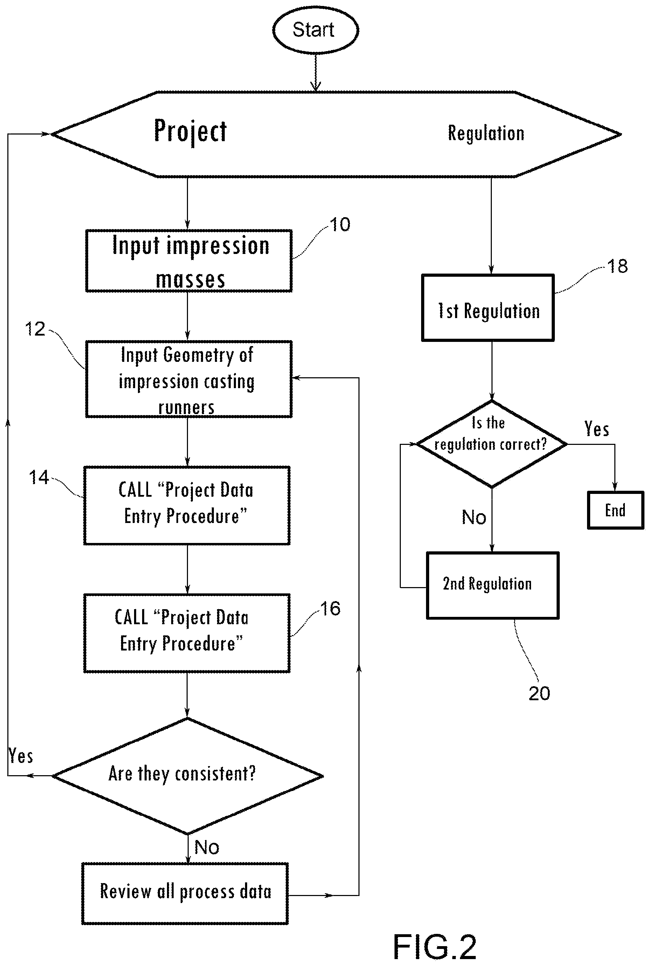

Figure 2 shows a flowchart of the calculation algorithm that implements the regulating method according to the invention.

In a first step, a plan of the ideal parameters of the die-casting process is made.

This first step requires the operator to enter the data identifying the die from the geometric perspective and its type, as described hereinafter.

The masses of the impressions (e.g. obtained from a simulation carried out with simulation software) and the geometry of the impression casting runners (e.g. sub-step 12) are entered (sub-step 10), for example, indicating the height and width thereof.

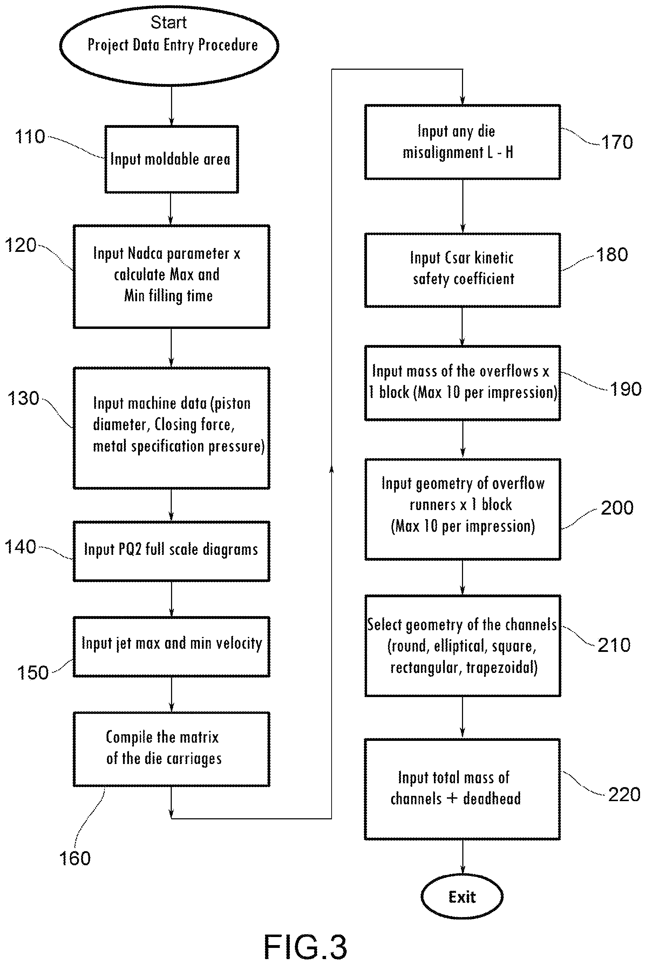

A procedure for entering project data, represented by the flowchart in figure 3, is thus called (sub-step 14).

In a first step 110, the moldable area of the die is entered, which will be used to size the injection machine in terms of closing force. For example, the moldable area is calculated by entering the length and width of the die cast piece and the full/empty percentage into the calculation algorithm.

In a second step 120, parameters are entered to calculate the minimum filling time and the maximum filling time. For example, such parameters comprise an indication of whether the die is balanced or unbalanced, the minimum and/or weighted average thickness of the piece, the temperatures of the furnace and die, the maximum distance between the point of entry of the liquid material into the die and the farthest point of all the cavities.

One or more formulas may be used to calculate the filling times. For example, the "Nadca" formula is used.

In a third step 130 some identification data for the injection machine is entered that is initially assumed to be, at least among those available to the operator of the foundry, the most suitable to cast the desired piece. In particular, such data comprises the diameter of the injection piston, the closing force and the specific pressure that is desired to be exerted on the metallic material in the liquid state to obtain pieces with the desired quality.

In the fourth step 140 the full scale of the PQ2 diagrams that represent the machine-die coupling may be entered to obtain an automatic scaling of all the PQ2 diagrams present in the database, so that they may be analyzed immediately with maximum ease.

In a fifth step 150 the maximum and minimum runner or jet velocities are calculated and provided to the algorithm, i.e. the permissible velocity range for the liquid metal when it passes through the impression and overflow casting runner. More precisely, for the overflow it is sufficient that the velocity is equal to or lower than the maximum runner velocity, while for the impression it is important for the runner velocity to also be higher than a minimum velocity.

The minimum velocity is determined by the minimum height dimension of the casting runner. For example, there are tables showing the minimum recommended velocity as a function of the different heights, or thicknesses, of the casting runners. The maximum recommended velocity, on the other hand, depends mainly on the material used. For example, the minimum velocity may be about 15 m/s and the maximum velocity 60 m/s.

In a sixth step 160, the number of possible die carriages is entered.

In a seventh step 170 an indication of any misalignment of the die is entered, or if the die is not balanced because there are cavities and/or blocks distributed in a non-symmetrical way.

In an eighth step 180 a kinetic safety coefficient is entered that, in particular, takes into account the pressure surge suffered by the metal in the liquid state at the end of the stage two piston stroke.

In a ninth step 190 the value of the overflow mass is entered. To make data entry faster, one may enter a single indicative value of all the overflows of a block.

In a tenth step 200, the geometry of the casting runners of the overflows is entered, for example, expressed by the dimensions in width and height thereof. Also in this case a single value representative of the geometry of the overflows of each block may be entered.

In an eleventh step 210 the algorithm is provided with an indication of the geometry of the casting channels, in particular the cross-section shape and the length thereof. For example, each of the possible cross-sections, round, elliptical, square, rectangular, trapezoidal, is associated with an indicator. Each of such cross-sections is thus described by the combination of such indicator with the cross-section width and height dimensions. In the case of a trapezoidal cross-section, the angle between the base and the oblique side is also indicated.

In a twelfth step 220 the total masses of the channels and the deadhead are entered.

At this point, the calculation algorithm calculates, for each impression and each overflow, the filling time and the runner velocity, thus providing a matrix of filling times and runner velocities of the impressions and a matrix of filling times and runner velocities of the overflows. In the case of unbalanced dies, the cavities may be filled at different times, as the casting runners (even of identical impressions) are reached at different times. For example, the nearest impression is usually filled in a longer time than the furthest impression, as its filling begins immediately but only ends when the furthest impression has been filled. Therefore, the filling time of the nearest impression is substantially the sum of the filling time of the furthest impression, given by one of the aforementioned theoretical calculation formulas, for example the Nadca formula, with the transfer time of the material from the point of entry into the die to the furthest casting runner.

Starting from the mass of the single impression, which must be filled in a precise and calculated time, it is possible to calculate its volume and the flow rate; consequently, the runner velocity of each single impression is calculated.

In one embodiment, the calculation algorithm calculates, moreover, starting from the PQ2 diagrams of the injection machine - injection piston diameter combination, the stage two peak velocity of the injection piston. The method for calculating the stage two peak velocity is similar to the method described above for calculating the runner velocity and uses the same parameters (filling time, volume, flow rate, etc.). However, while in the previous case the calculation algorithm leads to the construction of a parameter matrix (for the runner velocity), in this case there is only one value and it concerns the peak velocity of the injection piston on the machine compared to the filling capacity of all the impressions and all the overflows in the die.

In one embodiment, the calculation algorithm calculates, moreover, the opening force of the die. The opening force (in tons) is equal to the product of the moldable area of the die and the specific pressure on the metal that the machine - piston diameter combination is able to exert on the molten metal that is entering the die.

At this point, the regulating method provides for a step for verifying that the design parameters of the injection process, calculated from the characteristics of the die and the injection machine chosen, are consistent with the design quality required.

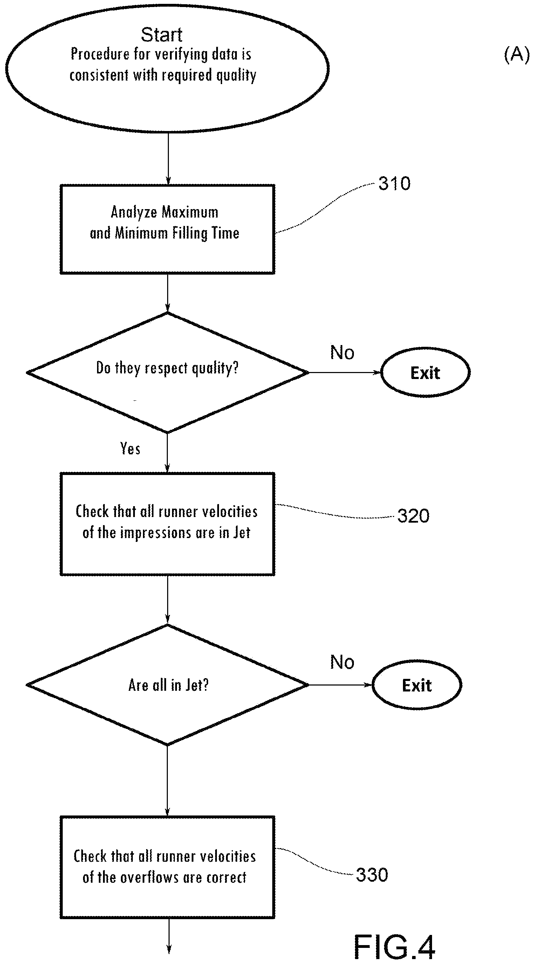

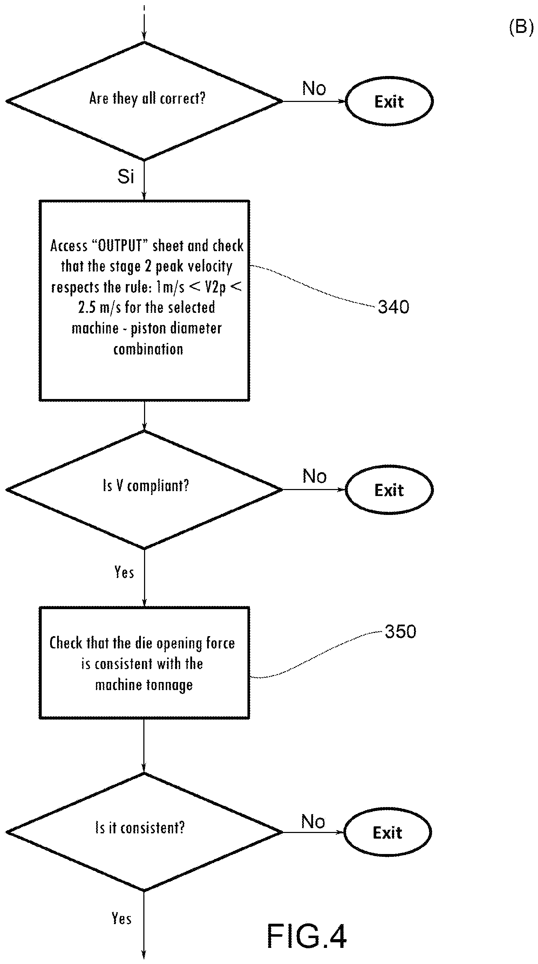

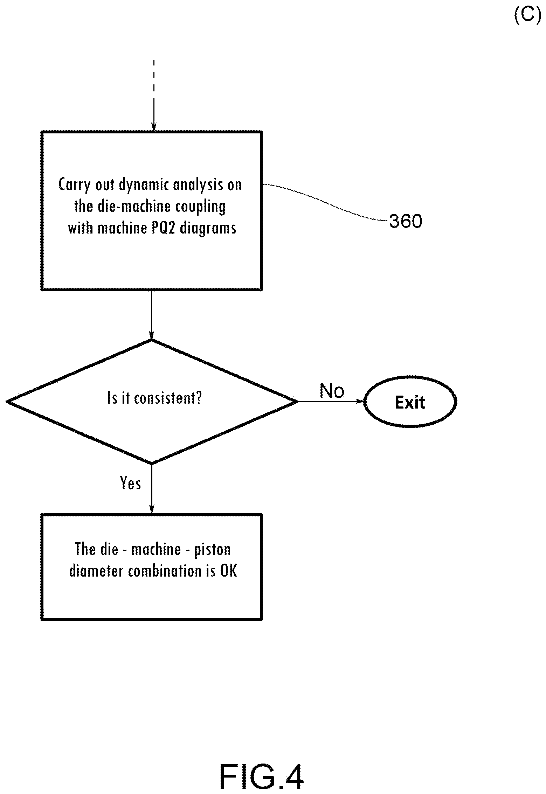

Returning to the design stage of the design parameters of the injection process, once the design data entry procedure called in sub-step 14 has been completed, a "procedure to verify the data is consistent with required quality" is called in sub-step 16. An example of such a verification procedure is shown in the flow diagram in figure 4.

In a first step 310, the filling times of the die cavities are compared with the minimum filling time and the maximum filling time.

If such comparison gives a negative result, i.e. the filling time is not within the predetermined range, the verification procedure ends, and the process data must be modified.

If such comparison gives a positive result, a second step 320 of comparing the runner velocity of each impression and the predetermined runner velocity range is carried out.

If such comparison gives a negative result, i.e. the runner velocity is not within the predetermined range, the verification procedure ends, and the process data must be modified.

If such comparison gives a positive result, a third step 330 of comparing the runner velocities of the overflows and the predetermined runner velocity range is carried out.

If such comparison gives a negative result, i.e. the runner velocity of the overflows is not within the predetermined range, the verification procedure ends, and the process data must be modified.

In one embodiment, if such a comparison gives a positive result, a fourth stage 340 of comparing the stage two peak velocity of the injection piston and a predetermined peak velocity range, for example between 1 m/s and 2.5 m/s, is carried out.

For example, a peak velocity that is too low may mean that the injection machine is too large and cannot be regulated.

If the peak velocity is too high, there is a risk of generating excessive turbulence in the flow of the injected metallic material, which may cause air bubbles to form in the material. In addition, an indicator of this type is able to show that the chosen machine - injection piston diameter combination is undersized, relative to the die.

If the stage two peak velocity is correct, it is possible to cast in optimal jet conditions.

If such comparison gives a negative result, i.e. the stage two peak velocity is not within the predetermined range, the verification procedure ends, and the process data must be modified.

In one embodiment, if such comparison gives a positive result, a fifth stage 350 is carried out to verify that the opening force of the die is lower than the closing force of the chosen injection machine (tonnage).

If this verification gives a negative result, the verification procedure ends, and the process data must be modified.

In one embodiment, if such verification gives a positive result, a sixth stage 360 of analyzing the machine - die coupling is carried out, which provides in particular for verifying whether the average quadratic flow rate calculated by the algorithm is within the jet zone defined by the PQ2 diagram.

If this verification gives a negative result, the verification procedure ends, and the process data must be modified.

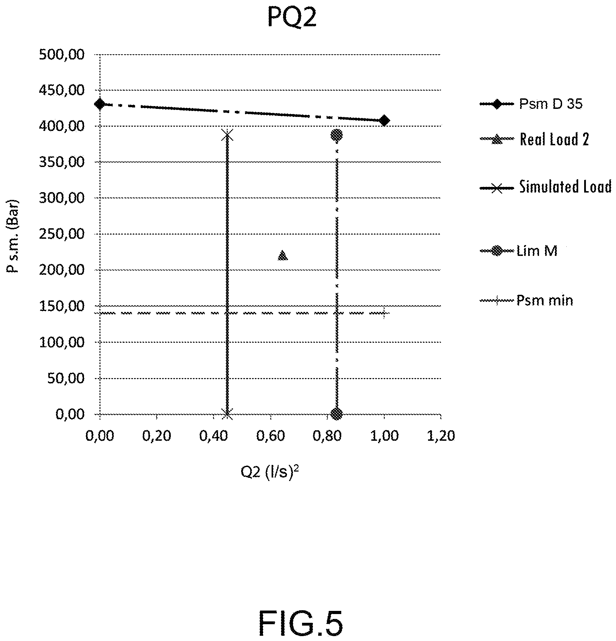

If such verification gives a positive result (as for example shown in figure 5), the procedure for verifying the consistency of the design data ends and one may conclude that the theoretical process data are correct for the required quality and will serve as the target for the subsequent regulation steps.

If instead this verification ends negatively, the process data must be modified. For example, the foundry operator may modify the geometry of the die by performing mechanical machining thereon and/or may change the diameter of the injection piston and/or the closing force of the machine, or a different machine may be used.

As the process data has been modified, the sub-steps 12 to 16 of the first design step of the casting process parameters are repeated.

When the process data is correct, the regulating method is applied to the selected injection machine (step 18 in the algorithm in figure 2). In particular, the operator makes a first regulation of the design parameters of the injection machine based on the theoretical process data planned in the first step, and then a die cast piece is made using such parameters.

This first die cast piece is useful to detect the actual dynamic behavior of the machine, measure the effective process parameters and, knowing the dynamics of the machine and the value of the effective parameters, determine how the design parameters of the machine should be further regulated to get as close as possible to the theoretical parameters of the injection process so as to reduce waste as much as possible and obtain pieces with the required quality.

In particular, the dynamic behavior of the machine, i.e. the performance thereof, is measured by detecting the injection curves of the machine, expressed by the combination of the stroke and velocity curves of the injection piston. The injection curves are detected by means of sensors provided on the injection machine.

In general, the curve that identifies the stroke of the injection piston is obtained from an encoder mounted on the machine, while the velocity curve is obtained from that of the stroke. There is also a pressure switch able to trace the pressure curve throughout the injection profile.

In one embodiment, the design parameters of the injection machine comprise parameters that identify the first acceleration stage of the injection piston (ramp), the first velocity stage, i.e. the velocity of the piston in the stage of accompaniment of the metallic material in its liquid state up to the casting runners of the impressions, the stage two velocity, i.e. the velocity of the piston during the stage of filling the die cavities and overflows, the volume of the piston stroke at which the acceleration of the piston, which leads to the stage two velocity, operates, and, if provided for, the braking velocity of the piston and the volume of the piston stroke at which the brake operates.

For example, the velocities may be expressed in terms of the percentage of opening of the control valves of the control fluid of the piston; action volumes depend on the state-switching times of such control valves.

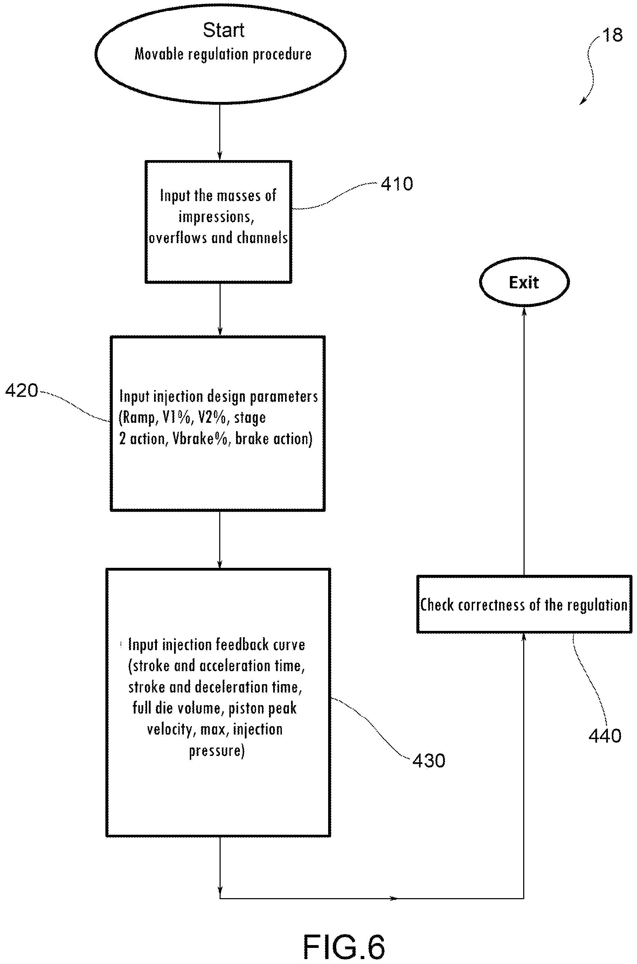

With reference to the flowchart in figure 6, which illustrates an example of the first regulation step 18, in a first sub-step 410 the operator, after the machine has made the die cast piece, provides the calculation algorithm with the effective impression, overflow and channel masses.

In a second sub-step 420, the operator enters the design data of the machine that was used initially.

In a third step 430, the operator enters the data obtained from the detected injection curve. For example, such data comprises: the stroke and the acceleration time of the injection piston, the stroke and the deceleration time of the piston, the volume of the piston stroke at which the complete filling of the die occurs, the peak velocity of the injection piston, the maximum injection pressure.

At this point, a verification is made (sub-step 440) of the correctness of the regulation made by the operator and, since it is very likely that the design parameters set by the operator are not correct initially, a measurement of the distance between such parameters and the ideal parameters is carried out.

In particular, the algorithm calculates, starting from the values of the effective masses of impressions, overflows and casting channels and from the data obtainable from the injection curve, the effective filling time and the effective runner velocity for each cavity and overflow.

The algorithm thus verifies whether the effective filling times and effective runner velocities are within an acceptable range of the theoretical filling times and theoretical runner velocities.

In one embodiment, in the process parameter design stage, the calculation algorithm carries out a calculation of the theoretical portion of the injection piston stroke wherein the complete filling of the die cavities and the overflows occurs after the material has reached the casting runners. The algorithm thus calculates, on the basis of the data of the detected injection curve and of such theoretical portion of the injection piston stroke, the theoretical stage two action volume of the injection piston stroke.

The algorithm thus verifies if the actual stage two action volume, i.e. the effective volume, programmed in the machine, is in an acceptable range of the previously calculated theoretical stage two action volume.

For example, the theoretical stage two action volume is calculated by subtracting from the effective full die stroke obtained from the injection curve detected from the injection piston the previously calculated theoretical portion of the injection piston stroke to fill the die cavities and the overflows completely (generally during the injection piston deceleration step) and the acceleration stroke of the injection piston necessary to reach the stage two peak velocity.

In particular, in one embodiment, the calculation algorithm provides for entering some parameters that originate from the injection curves of the machine, such as: full stroke of the die, stroke of the injection piston equivalent to the filling of only impressions and overflows (generally all performed in deceleration), time taken by the injection piston to complete that stroke, velocity reached in acceleration by the injection piston before it completes that stroke, time necessary for the injection piston to reach that velocity in acceleration, acceleration stroke necessary for the injection piston to reach the previously described velocity.

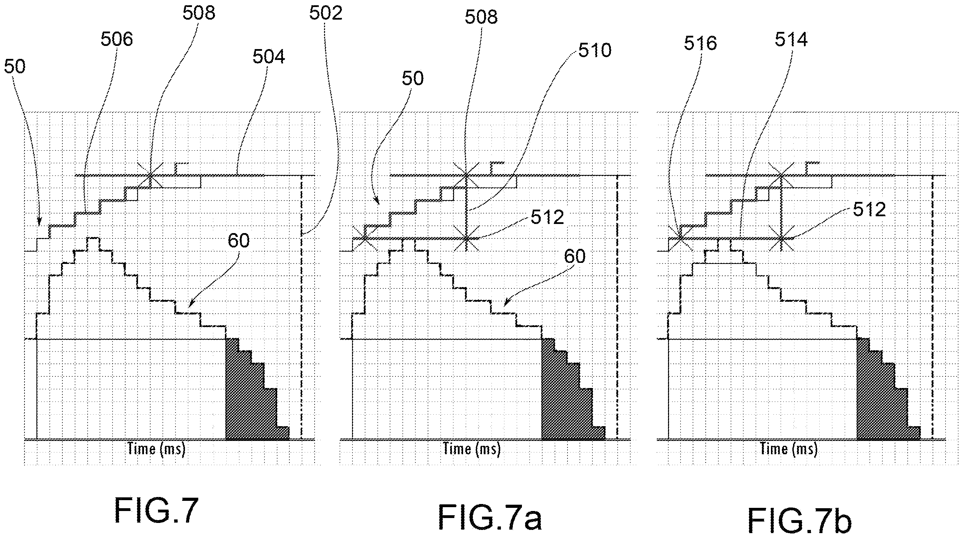

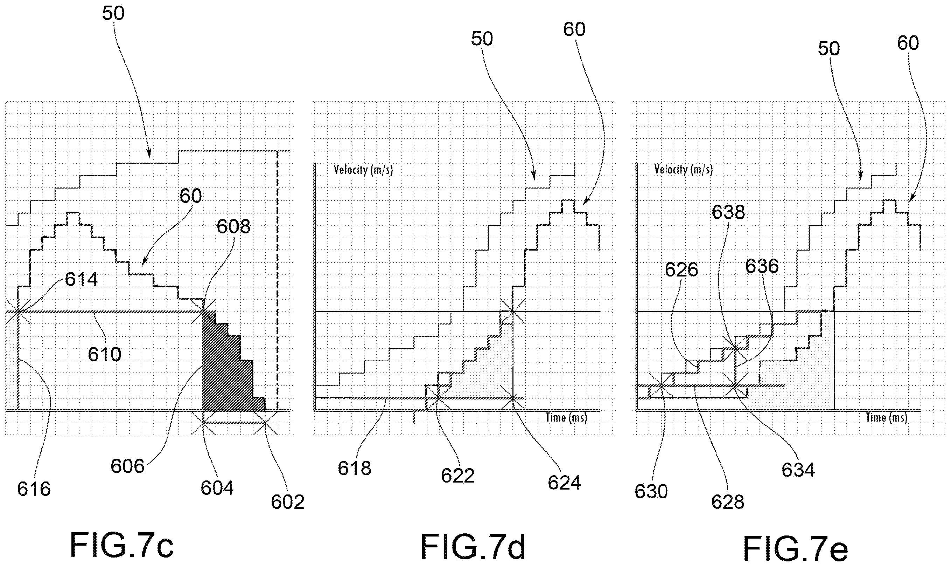

With reference to figures 7-7e, the algorithm for calculating the suggested stage two action volume will now be described.

The calculation algorithm is based on the injection curves detected and represented in the graphs of figures 7-7e, wherein the x-axis represents the time (in ms) while the y-axis represents, according to the case, the stroke of the injection piston (in mm) or the velocity of the injection piston (in m/s).

During the procedure, the algorithm moves between the two curves representing stroke (indicated at 50 in the graphs) and velocity (indicated at 60 in the graphs), the velocity curve, being obtained from the stroke curve (derivative plus filter), resulting in a shift over time.

With reference to the diagram in figure 7, the algorithm is positioned at the end of the stroke curve 50 of the injection piston and measures the volume of the full die 502.

The algorithm then traces the line 504 tangent to the end of the stroke curve 50 and the line 506 tangent to the stroke curve 50 while the filling stage is still in progress.

The algorithm then calculates the intersection point 508 between the two tangent lines 504 and 506, which represents the injection end point.

The calculation algorithm retrieves, from the design stage, the value of the stroke of the injection piston relative to the filling stroke of all the impressions plus all the overflows in stage two (stage two stroke).

The algorithm traces (figure 7a), starting from the intersection point 508, a vertical line 510 that descends from the intersection point 508 for a value equal to the stroke of the injection piston relative to the filling stroke of all the impressions plus all the overflows in stage two (stage two stroke), identifying the point 512, corresponding to the deceleration stroke.

The algorithm traces (figure 7b) a horizontal line 514 that passes through the point 512 previously found and crosses the stroke curve 50 at the point 516. The algorithm thus calculates the distance between the two points 512, 516 on the horizontal line 514, which corresponds to the deceleration time.

The algorithm now positions itself at the end of the velocity curve 60 (figure 7c). The intersection point 602 is identified on the x-axis with the end of the velocity curve 60 and goes back on the x-axis for a time equal to the deceleration time previously measured, identifying the point 604.

The algorithm then traces a vertical line 606 that passes over the last point 604 defined on the x-axis until it crosses the velocity curve 60, identifying on such curve the point 608. The velocity of the piston at this point 608 is the ideal peak velocity (at this point, in effect, the casting runners begin to pass through).

The algorithm then traces a horizontal line 610 through the point 608 previously identified and which crosses the velocity curve 60 during the acceleration stage, identifying the point 614.

The algorithm then traces a vertical line 616 that passes through the point 614 and crosses the x-axis.

The algorithm now positions itself at the beginning of the acceleration of the velocity curve 60 (figure 7d) and traces the line 618 tangent to the constant low velocity stretch (which corresponds to stage one).

The algorithm then traces the line 620 tangent to the velocity curve 60 on the stretch where it begins to accelerate to the desired stage two velocity.

The algorithm then calculates the intersection point 622 between the two tangent lines 618, 620 just defined above.

The algorithm also calculates the intersection point 624 given by the intersection between the tangent line 618 and the vertical line 616. The acceleration time is then calculated as the difference on the x-axis between points 622 and 624.

The algorithm finally rests on the stroke curve 50 (figure 7e) and traces the line 626 tangent to the stroke curve 50 in the stretch wherein it begins to accelerate to reach the desired stage two velocity.

The algorithm then traces the line 628 tangent to the stroke curve 50, in the stretch wherein the piston moves at a constant velocity, that is, in stage one.

The algorithm identifies the intersection point 630 of the two lines 626, 628. On the horizontal line 628 a second point 634 is defined which is separated from the first point 630 by a value equal to the acceleration time previously calculated.

Starting from this last point 634, the algorithm draws a vertical line 636 that crosses the stroke curve 50 at point 638.

The algorithm then calculates the distance between the last two points found, 634, 638, which corresponds to the acceleration stroke.

As mentioned above, the ideal action volume of stage two is equal to the full die volume from which the acceleration and deceleration strokes are subtracted.

If the actual filling times and/or the actual runner velocity and/or the actual stage two action volume are not within an acceptable range of the corresponding theoretical values, the operator must make a second regulation (sub-step 20) of the machine's design parameters, make a second die cast piece and repeat the procedure to verify the correctness of the parameters described above.

As said above, regulating the design parameters of the injection machine comprises a regulation of the width of the opening and/or the opening times of control valves which control the inflow of a control fluid which drives the injection piston.

A processing system configured to implement the regulating method described above is also the subject of this invention. For example, the processing system may comprise a personal computer, a tablet, a smartphone, or combinations thereof.

A computer program that may be run by a processing system, comprising code modules to implement the regulating method described above, is also the subject of the invention.

The invention also concerns a computer product wherein a computer program is stored that may be run by a processing system to implement the regulating method described above.

To the embodiments of the regulating method of a die-casting process according to the invention, those skilled in the art, to satisfy contingent needs, may make modifications, adaptations and replacements of some elements with others that are functionally equivalent, without departing from the scope of the following claims. Each of the features described as belonging to a possible embodiment may be implemented independently from the other described embodiments.

## Claims

1. Method for regulating a die-casting process, where said die-casting process employs a die-casting apparatus comprising a machine for the injection of a metallic material in the liquid state coupled to a die suitable to receive the material under pressure in the liquid state, where the injection machine comprises an injection piston, and where the die has at least one block wherein are obtained:
- a plurality of die cavities,
- at least one injection channel connected to said plurality of die cavities by means of respective casting runners,
- and a plurality of overflows, at least one overflow communicating with a respective die cavity,
the method comprising the steps of:
a) designing the parameters of the die-casting process, comprising the sub-steps of:
a1) setting a range of acceptable filling times for filling all die cavities and overflows;
a2) setting an allowable runner velocity range for the metallic material in the liquid state to pass through the casting runners;
a3) calculating, from die data representative of the geometry and type of the die, from the theoretical mass data of the impressions, the overflows, the casting channels and the deadhead, and from machine data comprising the diameter of the piston, the closing force, and the specific pressure to which the material in the liquid state is subjected, the theoretical filling times of each die cavity and the overflows and the theoretical runner velocities for each die cavity and for each overflow;
b) verifying whether the theoretical fill times and the theoretical runner velocities are within the respective predetermined ranges;
c) if the verification referred to in step b) gives a negative result, modifying the die and/or changing the injection machine and repeating steps a), b) and c); if the verification referred to in step b) gives a positive result:
d) making a first regulation of the injection parameters of the injection machine which determine the movements of the stroke and the velocity of the injection piston;
e) making a die cast piece with said injection parameters;
f) detecting the values of the effective masses of impressions, overflows and casting channels;
g) detecting the injection curves obtained from the die cast piece;
h) calculating, starting from the values of the effective masses of impressions, overflows and casting channels and from data obtainable from the injection curve, the effective filling time and the effective runner velocity for each cavity and overflow;
i) verifying whether the effective filling times and effective runner velocities are within an acceptable range of the theoretical filling times and theoretical runner velocities; if not:
j) carrying out a second regulation of the injection parameters of the injection machine and repeating steps e), g), h) and i).

2. Method according to claim 1, wherein the die data representative of the geometry and the type of the die comprise at least some of the following data: moldable area, casting runner geometry, overflow runner geometry, casting channel geometry, die shift, number of die carriages, kinetic safety coefficient.

3. Method according to any one of the preceding claims, wherein the step b) further comprises one of the sub-steps of:
b1) calculating the theoretical stage two velocity of the injection piston and verifying that it is within a predetermined stage two velocity range;
b2) calculating the opening force of the die and checking that it is less than the closing force of the injection machine;
b3) calculating the PQ2 diagram of the injection machine, calculating the quadratic flow of the material in the liquid state and verifying that said quadratic flow is within the jet zone defined by the lines of the PQ2 diagram.

4. Method according to any one of the preceding claims, wherein the data obtainable from the injection curve comprise: the stroke and the acceleration time of the injection piston, the stroke and the deceleration time of the piston, the volume of the piston stroke at which the complete filling of the die occurs, the peak velocity of the injection piston, the maximum injection pressure.

5. Method according to any one of the preceding claims, wherein:
- step a3) further comprises a calculation of the theoretical portion of the stroke of the injection piston wherein the complete filling of the die cavities and the overflows occurs after the material has reached the casting runners;
- step h) comprises the sub-steps of:
h1) detecting the effective volume of the stage two action of the stroke of the injection piston;
h2) calculating, on the basis of the data of the detected injection curve and of said theoretical portion of the stroke of the injection piston, the theoretical stage two action volume of the stroke of the injection piston;
- step i) further comprises a sub-step i1) of verifying if the effective stage two action volume is in an acceptable range of the theoretical stage two action volume calculated in step h2).

6. Method according to the preceding claim, wherein the theoretical stage two action volume is calculated by subtracting from the effective full die stroke obtained from the injection curve acquired from the injection piston the theoretical portion of the injection piston stroke calculated in step a3) to fill the die cavities and the overflows completely and the acceleration stroke of the injection piston necessary to reach the stage two peak velocity.

7. Method according to any one of the preceding claims, wherein the regulation of injection parameters of the injection machine comprises a regulation of the width of the opening and/or the opening times of control valves that control the inflow of a control fluid which drives the injection piston.

8. Data processing system comprising a personal computer, a tablet, a smartphone, or combinations thereof, configured to implement the regulating method according to any one of the preceding claims.

9. Computer program comprising code modules which, when the program is executed by a personal computer, a tablet, a smartphone, or combinations thereof, causes the personal computer, tablet, smartphone, or combinations thereof, to implement the regulating method according to any one of the claims 1-7.

10. Computer product, wherein the computer program of claim 9 is stored.

## Patentansprüche

1. Verfahren zum Regulieren eines Druckgießprozesses, wobei der Druckgießprozess eine Druckgießvorrichtung verwendet, welche eine Maschine für das Einspritzen eines metallischen Materials im flüssigen Zustand umfasst, die mit einer Form gekoppelt ist, welche dazu geeignet ist, das unter Druck stehende Material im flüssigen Zustand aufzunehmen, wobei die Einspritzmaschine einen Einspritzkolben umfasst und wobei die Form wenigstens einen Block aufweist, in welchem erhalten sind:
- eine Mehrzahl von Formhohlräumen,
- wenigstens ein Einspritzkanal, welcher mittels jeweiliger Gieß-Eingüsse mit der Mehrzahl von Formhohlräumen verbunden ist,
- und eine Mehrzahl von Überläufen, wobei wenigstens ein Überlauf mit einem jeweiligen Formhohlraum in Verbindung steht,
wobei das Verfahren die folgenden Schritte umfasst:
a) Gestalten der Parameter des Druckgießprozesses,
umfassend die folgenden Unterschritte:
a1) Festlegen eines Bereichs akzeptabler Füllzeiten zum Füllen aller Formhohlräume und Überläufe;
a2) Festlegen eines zulässigen Eingussgeschwindigkeitsbereichs für das metallische Material im flüssigen Zustand, um die Gieß-Eingüsse zu passieren;
a3) Berechnen, aus Formdaten, welche für die Geometrie und den Typ der Form repräsentativ sind, aus den theoretischen Massedaten der Vertiefungen, der Überläufe, der Gießkanäle und des Angusses sowie aus Maschinendaten, welche den Durchmesser des Kolbens, die Schließkraft und den spezifischen Druck umfassen, welchem das Material im flüssigen Zustand ausgesetzt ist, der theoretischen Füllzeiten jedes Formhohlraums und der Überläufe sowie der theoretischen Eingussgeschwindigkeiten für jeden Formhohlraum und für jeden Überlauf;
b) Verifizieren, ob die theoretischen Füllzeiten und die theoretischen Eingussgeschwindigkeiten innerhalb des jeweiligen vorbestimmten Bereichs liegen;
c) wenn die in Schritt b) aufgeführte Verifizierung ein negatives Ergebnis ergibt, Modifizieren der Form und/oder Wechseln der Einspritzmaschine und Wiederholen der Schritte a), b) und c); wenn die in Schritt b) aufgeführte Verifizierung ein positives Ergebnis ergibt:
d) Vornehmen einer ersten Regulierung der Einspritzparameter der Einspritzmaschine, welche die Bewegungen des Hubs und die Geschwindigkeit des Einspritzkolbens bestimmen;
e) Herstellen eines Druckgussteils mit den Einspritzparametern;
f) Detektieren der Werte der effektiven Massen von Vertiefungen, Überläufen und Gießkanälen;
g) Detektieren der aus dem Druckgussteil erhaltenen Einspritzkurven;
h) Berechnen, ausgehend von den Werten der effektiven Massen von Vertiefungen, Überläufen und Gießkanälen und von Daten, welche aus der Einspritzkurve erhältlich sind, der effektiven Füllzeit und der effektiven Eingussgeschwindigkeit für jeden Hohlraum und jeden Überlauf;
i) Verifizieren, ob die effektiven Füllzeiten und die effektiven Eingussgeschwindigkeiten innerhalb eines akzeptablen Bereichs der theoretischen Füllzeiten und der theoretischen Eingussgeschwindigkeiten liegen; falls nicht:
j) Ausführen einer zweiten Regulierung der Einspritzparameter der Einspritzmaschine und Wiederholen der Schritte e), g), h) und i).

2. Verfahren nach Anspruch 1, wobei die für die Geometrie und den Typ der Form repräsentativen Formdaten wenigstens einige der folgenden Daten umfassen:
formbarer Bereich, Gieß-Eingussgeometrie, Überlauf-Eingussgeometrie, Gießkanalgeometrie, Formverschiebung, Anzahl von Formschlitten, kinetischer Sicherheitskoeffizient.

3. Verfahren nach einem der vorhergehenden Ansprüche, wobei Schritt b) ferner einen der folgenden Unterschritte umfasst:
b1) Berechnen der theoretischen Geschwindigkeit der zweiten Stufe des Einspritzkolbens und Verifizieren, dass sie innerhalb eines vorbestimmten Geschwindigkeitsbereichs der zweiten Stufe liegt;
b2) Berechnen der Öffnungskraft der Form und Überprüfen, dass sie geringer ist als die Schließkraft der Einspritzmaschine;
b3) Berechnen des PQ2-Diagramms der Einspritzmaschine, Berechnen der quadratischen Strömung des Materials im flüssigen Zustand und Verifizieren, dass diese quadratische Strömung innerhalb der durch die Linien des PQ2-Diagramms definierten Strahlzone liegt.

4. Verfahren nach einem der vorhergehenden Ansprüche, wobei die aus der Einspritzkurve erhältlichen Daten umfassen: den Hub und die Beschleunigungszeit des Einspritzkolbens, den Hub und die Verzögerungszeit des Kolbens, das Volumen des Kolbenhubs, bei welchem das vollständige Füllen der Form eintritt, die Spitzengeschwindigkeit des Einspritzkolbens, den maximalen Einspritzdruck.

5. Verfahren nach einem der vorhergehenden Ansprüche, wobei:
- Schritt a3) ferner eine Berechnung des theoretischen Anteils des Hubs des Einspritzkolbens umfasst, wobei das vollständige Füllen der Formhohlräume und der Überläufe eintritt, nachdem das Material die Gieß-Eingüsse erreicht hat;
- Schritt h) die folgenden Unterschritte umfasst:
h1) Detektieren des effektiven Volumens der Wirkung der zweiten Stufe des Hubs des Einspritzkolbens;
h2) Berechnen, auf der Grundlage der Daten der detektierten Einspritzkurve und des theoretischen Anteils des Hubs des Einspritzkolbens, des theoretischen Wirkungsvolumens der zweiten Stufe des Hubs des Einspritzkolbens;
- Schritt i) ferner einen Unterschritt i1) eines Verifizierens umfasst, ob das effektive Wirkungsvolumen der zweiten Stufe in einem akzeptablen Bereich des in Schritt h2) berechneten theoretischen Wirkungsvolumens der zweiten Stufe liegt.

6. Verfahren nach dem vorhergehenden Anspruch, wobei das theoretische Wirkungsvolumen der zweiten Stufe berechnet wird, indem von dem effektiven vollen Formhub, welcher aus der von dem Einspritzkolben erfassten Einspritzkurve erhalten wird, der in Schritt a3) berechnete theoretische Anteil des Einspritzkolbenhubs, um die Formhohlräume und die Überläufe vollständig zu füllen, und der Beschleunigungshub des Einspritzkolbens, welcher notwendig ist, um die Spitzengeschwindigkeit der zweiten Stufe zu erreichen, abgezogen werden.

7. Verfahren nach einem der vorhergehenden Ansprüche, wobei die Regulierung von Einspritzparametern der Einspritzmaschine eine Regulierung der Breite der Öffnung und/oder der Öffnungszeiten von Steuer-/Regelventilen umfasst, welche die Einströmung eines Steuer-Regelfluids steuern/regeln, welches den Einspritzkolben antreibt.

8. Datenverarbeitungssystem, umfassend einen Personal Computer, ein Tablet, ein Smartphone oder Kombinationen davon, eingerichtet, um das Regulierungsverfahren nach einem der vorhergehenden Ansprüche zu implementieren.

9. Computerprogramm, umfassend Codemodule, welche, wenn das Programm von einem Personal Computer, einem Tablet, einem Smartphone oder Kombinationen davon ausgeführt wird, den Personal Computer, das Tablet, das Smartphone oder Kombinationen davon veranlasst, das Regulierungsverfahren nach einem der Ansprüche 1-7 zu implementieren.

10. Computerprodukt, worin das Computerprogramm nach Anspruch 9 gespeichert ist.

## Revendications

1. Procédé de régulation d'un procédé de moulage sous pression, dans lequel ledit procédé de moulage sous pression emploie un appareil de moulage sous pression comprenant une machine pour l'injection d'une matière métallique à l'état liquide couplée à un moule approprié pour recevoir la matière sous pression à l'état liquide,
dans lequel la machine d'injection comprend un piston d'injection, et dans lequel le moule a au moins un bloc dans lequel sont obtenus :
- une pluralité de cavités de moule,
- au moins un canal d'injection relié à ladite pluralité de cavités de moule au moyen de canaux secondaires d'injection de moulage respectifs,
- et une pluralité de trop-pleins, au moins un trop-plein communiquant avec une cavité de moule respective,
le procédé comprenant les étapes de :
a) conception des paramètres du procédé de moulage sous pression, comprenant les sous-étapes de :
a1) définition d'une plage de temps de remplissage acceptables pour remplir la totalité des cavités de moule et des trop-pleins ;
a2) définition d'une plage de vitesses admissibles de canal secondaire d'injection pour que la matière métallique à l'état liquide passe à travers les canaux secondaires d'injection de moulage ;
a3) calcul, à partir de données de moule représentatives de la géométrie et du type du moule, à partir des données de masse théorique des impressions, des trop-pleins, des canaux de moulage et de la hauteur à débit nul, et à partir de données de machine comprenant le diamètre du piston, la force de fermeture, et la pression spécifique à laquelle la matière à l'état liquide est soumise, les temps de remplissage théoriques de chaque cavité de moule et les trop-pleins et les vitesses théoriques de canal secondaire d'injection pour chaque cavité de moule et pour chaque trop-plein ;
b) vérification du fait que les temps de remplissage théoriques et les vitesses théoriques de canal secondaire d'injection sont dans les plages prédéterminées respectives ;
c) si la vérification mentionnée à l'étape b) donne un résultat négatif, modification du moule et/ou changement de la machine d'injection et répétition des étapes a), b) et c) ; si la vérification mentionnée à l'étape b) donne un résultat positif :
d) réalisation d'une première régulation des paramètres d'injection de la machine d'injection qui déterminent les mouvements de la course et la vitesse du piston d'injection ;
e) réalisation d'une pièce moulée sous pression avec lesdits paramètres d'injection ;
f) détection des valeurs des masses effectives d'impressions, de trop-pleins et de canaux de moulage ;
g) détection des courbes d'injection obtenues à partir de la pièce moulée sous pression ;
h) calcul, en partant des valeurs des masses effectives d'impressions, de trop-pleins et de canaux de moulage et de données pouvant être obtenues à partir de la courbe d'injection, du temps de remplissage effectif et de la vitesse effective de canal secondaire d'injection pour chaque cavité et trop-plein ;
i) vérification du fait que les temps de remplissage effectifs et les vitesses effectives de canal secondaire d'injection sont dans une plage acceptable des temps de remplissage théoriques et des vitesses théoriques de canal d'injection secondaire ; si ce n'est pas le cas :
j) exécution d'une seconde régulation des paramètres d'injection de la machine d'injection et répétition des étapes e), g), h) et i).

2. Procédé selon la revendication 1, dans lequel les données de moule représentatives de la géométrie et du type du moule comprennent au moins certaines des données suivantes : une zone moulable, une géométrie de canal secondaire d'injection de moulage, une géométrie de canal secondaire d'injection de trop-plein, une géométrie de canal de moulage, un déplacement de moule, un nombre de chariots porte-moule, un coefficient de sécurité cinétique.

3. Procédé selon l'une quelconque des revendications précédentes, dans lequel l'étape b) comprend en outre l'une des sous-étapes de :
b1) calcul de la vitesse théorique de stade deux du piston d'injection et vérification du fait qu'il est dans une plage de vitesses de stade deux prédéterminée ;
b2) calcul de la force d'ouverture du moule et contrôle du fait qu'elle est inférieure à la force de fermeture de la machine d'injection ;
b3) calcul du diagramme PQ2 de la machine d'injection, calcul du flux quadratique de la matière à l'état liquide et vérification que ledit écoulement quadratique est dans la zone de jet définie par les lignes du diagramme PQ2.

4. Procédé selon l'une quelconque des revendications précédentes, dans lequel les données pouvant être obtenues à partir de la courbe d'injection comprennent : la course et le temps d'accélération du piston d'injection, la course et le temps de décélération du piston, le volume de la course de piston à laquelle le remplissage complet du moule se produit, la vitesse de crête du piston d'injection, la pression d'injection maximale.

5. Procédé selon l'une quelconque des revendications précédentes, dans lequel :
- l'étape a3) comprend en outre un calcul de la portion théorique de la course du piston d'injection dans lequel le remplissage complet des cavités de moule et des trop-pleins se produit une fois que la matière a atteint les canaux secondaires d'injection de moulage ;
- l'étape h) comprend les sous-étapes de :
h1) détection du volume effectif de l'action de stade deux de la course du piston d'injection ;
h2) calcul, sur la base des données de la courbe d'injection détectée et de ladite portion théorique de la course du piston d'injection, du volume d'action de stade deux théorique de la course du piston d'injection ;
- l'étape i) comprend en outre une sous-étape i1) de vérification du fait que le volume d'action de stade deux effectif est dans une plage acceptable du volume d'action de stade deux théorique calculé à l'étape h2).

6. Procédé selon la revendication précédente, dans lequel le volume d'action de stade deux théorique est calculé en soustrayant de la course de moule entière effective obtenue à partir de la courbe d'injection acquise auprès du piston d'injection, la portion théorique de la course de piston d'injection calculée à l'étape a3) pour remplir complètement les cavités de moule et les trop-pleins et la course d'accélération du piston d'injection nécessaire pour atteindre la vitesse de crête de stade deux.

7. Procédé selon l'une quelconque des revendications précédentes, dans lequel la régulation de paramètres d'injection de la machine d'injection comprend une régulation de la largeur de l'ouverture et/ou des temps d'ouverture de vannes de commande qui commandent l'arrivée d'un fluide de commande qui entraîne le piston d'injection.

8. Système de traitement de données comprenant un ordinateur personnel, une tablette, un téléphone intelligent, ou des combinaisons de ceux-ci, configuré pour mettre en œuvre le procédé de régulation selon l'une quelconque des revendications précédentes.

9. Programme d'ordinateur comprenant des modules de code qui, lorsque le programme est exécuté par un ordinateur personnel, une tablette, un téléphone intelligent, ou des combinaisons de ceux-ci, amènent l'ordinateur personnel, la tablette, le téléphone intelligent, ou des combinaisons de ceux-ci, à mettre en œuvre le procédé de régulation selon l'une quelconque des revendications 1 à 7.

10. Produit d'ordinateur, dans lequel est stocké le programme d'ordinateur de la revendication 9.
